# EUROPEAN PATENT SPECIFICATION

(11) **EP 4 139 377 B1**
(45) Date of publication and mention of the grant of the patent: **08.05.2024**
(21) Application number: 21718922.4
(22) Date of filing: 21.04.2021
(51) Int. Cl.: C08G 63/08, C08G 63/78

(54) **PROCESS FOR POLYMERISING LACTIDE INTO POLYLACTIC ACID**
VERFAHREN ZUR POLYMERISATION VON LACTID ZU POLYMILCHSÄURE
PROCÉDÉ DE POLYMÉRISATION DE LACTIDE EN ACIDE POLYLACTIQUE

(30) Priority: 23.04.2020 EP 20171200
(43) Date of publication of application: 01.03.2023
(73) Proprietor: TotalEnergies OneTech Belgium, 7181 Seneffe (BE)
(72) Inventor: EON, Serge, 1410 WATERLOO (BE); LOOZEN, Denis, 1180 Uccle (BE)
(74) Representative: De Clercq & Partners
(86) International application number: PCT/EP2021/060342
(87) International publication number: WO 2021/214120

(56) References cited:
- US-A1- 2010 004 404
- US-A1- 2015 018 513
- US-A1- 2015 252 141
- US-B2- 10 414 917

## Description

### FIELD OF INVENTION

The present invention relates to a process for polymerising lactide into polylactic acid. The present invention also relates to reactor configuration for polymerising lactide into polylactic acid.

### BACKGROUND OF THE INVENTION

Polylactic acid (PLA), a renewable resource mainly obtained from corn starch and sugar cane, is one of the most important bio-based and biodegradable plastics, and may replace petroleum based plastics in a range of applications. For the production of PLA, lactic acid (LA) is typically first converted into lactide (LD), its cyclic dimer. Subsequently, this lactide is converted via ring opening polymerization into PLA.

Lactic acid is chiral such that (R)-lactic acid (or D-lactic acid) and (S)-lactic acid (or L-lactic acid) exist. Furthermore, these enantiomers do not racemise readily. Thus, formation of lactide from two equivalents of lactic acid gives rise to three stereoisomers: (R,R)-lactide (or D-lactide), (S,S)-lactide (or L-lactide) and (R,S)-lactide (or Meso-lactide). Due to the available sources of sugar as well as bacteria used to transform it to lactic acid, the L enantiomer is currently by far the molecule with the highest quantity on the market. Hence available PLA grades are mostly PLLA (PLA made essentially of L pattern) and low D content PLA, i.e. polymer with more than 90% L pattern and remaining few percent of D pattern.

Current lactide polymerization processes consist in polymerizing a feed with a certain D content. D content is typically fixed right at the beginning of the process before feeding to the reactors, by mixing L-lactide, D-lactide and/or purified Meso-lactide. However, with the current usual reaction section configuration, this leads to multiple drawbacks described below.

Firstly, losses of production occur when there are grade changes, in particular when the targeted D content of the final product is changed. During a transition, when the mixture of L-lactide, D-lactide and/or purified meso-lactide is set at the beginning of the process, one has to wait for the full reaction section solution to be renewed for the transition to be complete. The transition product is often considered outside commercial specifications (also referred to as off-spec), and subsequently has to be recycled or sold at a reduced price compared to prime quality material. Therefore, there is a need to reduce the amount of off-spec product.

Secondly, whenever the D content needs to be fine-tuned, one has to wait until the whole reaction section solution is renewed, which can take a significant length of time. This is an additional constraint given by the operations to the commercial sales when the unit is fully utilized. Therefore, there is also a need to reduce the fine-tuning time.

Thirdly, due to the racemization during lactide production, a certain amount of Meso-lactide, typically between 7 to 8%, is generated. As half of Meso-lactide comprises the D pattern, 7 to 8 % meso-lactide corresponds to a 3.5 to 4% D content. If it is not incorporated into PLA product, it has to be recycled which is considered a loss. In parallel, to avoid pellets sticking together, PLA pellets are usually crystallised before packing, storage, and transportation. The D content slows down the crystallization rate and a usual max allowable D content is around 4%. But for practical operations, a margin has to be taken and the max D content for crystallised PLA pellets is often few tens of percent below, for example around 3.5%, which could potentially match with the amount of Meso-lactide generated in the lactide unit. Furthermore, the product slate of a PLA plant typically also contains PLLA grades to produce which do not incorporate D. This does not allow making full use of the Meso-lactide, and the excess need to be recycled which is considered a loss. Therefore, there is also a need to reduce loss of Meso-lactide.

Fourthly, for low D content PLA, the temperature melting point reduces with an increasing D content. As explained above, PLA pellets are usually crystallised to avoid lumps of pellets during storage and transportation. Since the usual practical max D content for operations is 3.5%, that sets a limit on the PLA temperature melting point for the manufacturers of PLA goods. Therefore, there is also a need to improve the PLA temperature melting point. US 2015/252141 A1 and US 2015/018513 A1 both disclose a two step process for polymerising lactide into polylactic acid involving a two polymerisation reactor sections. US 2015/252141 A1 and US 2015/018513 A1 do not disclose that the second lactide feed is fed between the first polymerisation reactor section and the second polymerisation reactor section after at most 95% of the total residence time. In both documents the reaction in the first reactor is completed before sending the polymer to the second reactor. This is done in order to obtain a stereoblock copolymer.

### SUMMARY OF THE INVENTION

It is therefore an object of the present invention to provide a process and a reactor configuration that reduces the amount of off-spec PLA produced during a transition. It is also an object of the present invention to provide a process and a reactor configuration that reduces the time of a transition. It is also an object of the present invention to provide a process and a reactor configuration that reduces Meso-lactide loss. It is also an object of the present invention to provide a process and a reactor configuration that allows for a wider range of PLA melting temperature.

The inventors have surprisingly found that a different way of incorporating of D and/or Meso-lactide can solve one or more of these issues. These objects are obtained by processes and reactor configurations as described herein, and embodiments thereof. More in particular, it has been found that the present processes and reactor configurations improve the transition time. By adding the D (or L respectively) and/or Meso-lactide after the first reactor section, one does not have to wait for the material in that section to be renewed. Only the material inside the second reactor section has to be renewed, thus reducing the transition time. Furthermore, it has been found that the present processes and reactor configurations improve the use of meso-lactide. With the present invention, the reactor volume to be renewed and the transition time are effectively shorter, meaning that less transition material is produced, and thus less meso-lactide is wasted.

In an aspect, the invention relates to a process for polymerising lactide into polylactic acid, the process comprising the steps of:
- feeding a first lactide feed into a first polymerisation reactor section; wherein the first lactide feed comprises L-lactide;
- feeding the output of the first polymerisation reactor section into a second polymerisation reactor section; and,
- feeding a second lactide feed into the second polymerisation reaction section between the first polymerisation reactor section and the second polymerisation reactor section, preferably after at most 95% of the total residence time; wherein the second lactide feed comprises D and/or meso-lactide; preferably wherein the second lactide feed comprises at least 40% by weight D/Meso-lactide, compared to the total weight of the second lactide feed.

In an aspect, the invention relates to a process for polymerising lactide into polylactic acid, the process comprising the steps of:
- feeding a first lactide feed into a first polymerisation reactor section; wherein the first lactide feed comprises D-lactide;
- feeding the output of the first polymerisation reactor section into a second polymerisation reactor section; and,
- feeding a second lactide feed into the second polymerisation reaction section between the first polymerisation reactor section and the second polymerisation reactor section, preferably after at most 95% of the total residence time; wherein the second lactide feed comprises L and/or meso-lactide; preferably wherein the second lactide feed comprises at least 40% by weight L/Meso-lactide, compared to the total weight of the second lactide feed.

In some preferred embodiments, the second lactide feed is fed between the first polymerisation reactor section and the second polymerisation reactor section after at least 30% of the total residence time, preferably after at least 40%, preferably after at least 50%, preferably after at least 60%, preferably after at least 70%, preferably after at least 75% of the total residence time, preferably after at least 76%, preferably after at least 77%, preferably after at least 78%, preferably after at least 79%, preferably after at least 80%.

In some preferred embodiments, the second lactide feed is fed between the first polymerisation reactor section and the second polymerisation reactor section after at most 95% of the total residence time, preferably after at most 90%, preferably after at most 85%, for example after at most 80%.

In some preferred embodiments, the first lactide feed is essentially free of D-lactide or essentially free of L-lactide.

In some preferred embodiments, the first lactide feed is essentially free of Meso-lactide.

In some preferred embodiments, the second lactide feed comprises at least 90% by weight D-lactide, compared to the total weight of the second lactide feed, preferably at least 95% D-lactide, preferably at least 97% D-lactide, preferably at least 98% D-lactide, preferably at least 99% D-lactide.

In some preferred embodiments, the second lactide feed comprises at least 30% by weight Meso-lactide, compared to the total weight of the second lactide feed, preferably at least 35% Meso-lactide, preferably at least 40% Meso-lactide, preferably at least 45% Meso-lactide, preferably at least 50% Meso-lactide.

In an aspect, the invention relates to a reactor configuration for polymerising lactide into polylactic acid, the reactor configuration comprising:
- a first polymerisation reactor section;
- a first lactide feeding line for feeding a first lactide feed into the first polymerisation reactor section; wherein the first lactide feed comprises L-lactide;
- a second polymerisation section;
- a feeding line for feeding the output of the first polymerisation reactor section into the second polymerisation reactor section; and,
- a second lactide feeding line for feeding a second lactide feed into the second polymerisation reaction section between the first polymerisation reactor section and the second polymerisation reactor section, the feeding lines preferably configured to feed the second lactide feed after at most 95% of the total residence time; wherein the second lactide feed comprises D and/or Meso-lactide; preferably wherein the second lactide feed comprises at least 40% by weight D/Meso-lactide, compared to the total weight of the second lactide feed.

In an aspect, the invention relates to a reactor configuration for polymerising lactide into polylactic acid, the reactor configuration comprising:
- a first polymerisation reactor section;
- a first lactide feeding line for feeding a first lactide feed into the first polymerisation reactor section; wherein the first lactide feed comprises D-lactide;
- a second polymerisation section;
- a feeding line for feeding the output of the first polymerisation reactor section into the second polymerisation reactor section; and,
- a second lactide feeding line for feeding a second lactide feed into the second polymerisation reaction section between the first polymerisation reactor section and the second polymerisation reactor section, the feeding lines preferably configured to feed the second lactide feed after at most 95% of the total residence time; wherein the second lactide feed comprises L and/or Meso-lactide; preferably wherein the second lactide feed comprises at least 40% by weight L/Meso-lactide, compared to the total weight of the second lactide feed.

In some preferred embodiments, the first polymerisation reactor section comprises one or more CSTR type reactors.

In some preferred embodiments, wherein the first polymerisation reactor section comprises one or more CSTR type reactors and one or more PFR type reactors.

In some preferred embodiments, the second polymerisation reactor section comprises one or more PFR type reactors.

In some preferred embodiments, the process as described herein, or an embodiment thereof, is performed in a reactor configuration as described herein, or an embodiment thereof.

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

### BRIEF DESCRIPTION OF THE DRAWINGS

**FIG. 1** illustrates an exemplary reaction section according to an embodiment, comprising a CSTR type reactor and a PFR type reactor, whereby the D lactide feed is between the two reactors. The first feed line comprises no D lactide nor Meso-lactide.
**FIG. 2** illustrates an exemplary reaction section according to an embodiment, comprising 2 PFR reactors, whereby the D lactide feed is between the two reactors. The first feed line comprises no D lactide nor Meso-lactide.
**FIG. 3** illustrates an exemplary reaction section according to an embodiment, comprising 1 CSTR type reactor, and 2 PFR type (which includes tubular type) reactors (one agitated, and one static), whereby the D and/or Meso-lactide feed is between the two PFR type reactors. The first feed line comprises no D nor Meso-lactide.
**FIG. 4** illustrates an exemplary reaction section according to an embodiment, comprising 1 CSTR type reactor, and 2 PFR type reactors (both agitated), whereby the D and/or Meso-lactide feed is between the two PFR type reactors. The first feed line comprises no D nor Meso-lactide.

### DETAILED DESCRIPTION OF THE INVENTION

Before the present method used in the invention is described, it is to be understood that this invention is not limited to particular methods described, as such methods may, of course, vary. It is also to be understood that the terminology used herein is not intended to be limiting, since the scope of the present invention will be limited only by the appended claims.

When describing the processes and reactor configurations of the invention, the terms used are to be construed in accordance with the following definitions, unless a context dictates otherwise. As used herein, the singular forms "a", "an", and "the" include both singular and plural referents unless the context clearly dictates otherwise. By way of example, "a reactor" means one reactor or more than one reactor.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims and statements, any of the embodiments can be used in any combination.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention.

Preferred statements (features) and embodiments of the methods of this invention are set herein below. Each statement and embodiment of the invention so defined may be combined with any other statement and/or embodiments unless clearly indicated to the contrary. In particular, any feature indicated as being preferred or advantageous may be combined with any other feature or features or statements indicated as being preferred or advantageous. Hereto, the present invention is in particular captured by any one or any combination of one or more of the below numbered statements 1 to 38 and/or embodiments with any other statement(s) and/or embodiment(s).
1. A process for polymerising lactide into polylactic acid, the process comprising the steps of:
   - feeding a first lactide feed into a first polymerisation reactor section; wherein the first lactide feed comprises L-lactide;
   - feeding the output of the first polymerisation reactor section into a second polymerisation reactor section; and,
   - feeding a second lactide feed into the second polymerisation reaction section between the first polymerisation reactor section and the second polymerisation reactor section, preferably after at most 95% of the total residence time; wherein the second lactide feed comprises D and/or meso-lactide; preferably wherein the second lactide feed comprises at least 40% by weight D/Meso-lactide, compared to the total weight of the second lactide feed.
2. A process for polymerising lactide into polylactic acid, the process comprising the steps of:
   - feeding a first lactide feed into a first polymerisation reactor section; wherein the first lactide feed comprises D-lactide;
   - feeding the output of the first polymerisation reactor section into a second polymerisation reactor section; and,
   - feeding a second lactide feed into the second polymerisation reaction section between the first polymerisation reactor section and the second polymerisation reactor section, preferably after at most 95% of the total residence time; wherein the second lactide feed comprises L and/or meso-lactide; preferably wherein the second lactide feed comprises at least 40% by weight L/Meso-lactide, compared to the total weight of the second lactide feed.
3. A reactor configuration for polymerising lactide into polylactic acid, the reactor configuration comprising:
   - a first polymerisation reactor section;
   - a first lactide feeding line for feeding a first lactide feed into the first polymerisation reactor section; wherein the first lactide feed comprises L-lactide;
   - a second polymerisation section;
   - a feeding line for feeding the output of the first polymerisation reactor section into the second polymerisation reactor section; and,
   - a second lactide feeding line for feeding a second lactide feed into the second polymerisation reaction section between the first polymerisation reactor section and the second polymerisation reactor section, the feeding lines preferably configured to feed the second lactide feed after at most 95% of the total residence time; wherein the second lactide feed comprises D and/or Meso-lactide; preferably wherein the second lactide feed comprises at least 40% by weight D/Meso-lactide, compared to the total weight of the second lactide feed.
4. A reactor configuration for polymerising lactide into polylactic acid, the reactor configuration comprising:
   - a first polymerisation reactor section;
   - a first lactide feeding line for feeding a first lactide feed into the first polymerisation reactor section; wherein the first lactide feed comprises D-lactide;
   - a second polymerisation section;
   - a feeding line for feeding the output of the first polymerisation reactor section into the second polymerisation reactor section; and,
   - a second lactide feeding line for feeding a second lactide feed into the second polymerisation reaction section between the first polymerisation reactor section and the second polymerisation reactor section, the feeding lines preferably configured to feed the second lactide feed after at most 95% of the total residence time; wherein the second lactide feed comprises L and/or Meso-lactide; preferably wherein the second lactide feed comprises at least 40% by weight L/Meso-lactide, compared to the total weight of the second lactide feed.
5. The process or reactor configuration according to any of the above statements, or in some embodiments described herein, wherein the second lactide feed is fed between the first polymerisation reactor section and the second polymerisation reactor section after at least 30% of the total residence time, preferably after at least 40%, preferably after at least 50%, preferably after at least 60%, preferably after at least 70%.
6. The process or reactor configuration according to any of the above statements, or in some embodiments described herein, wherein the second lactide feed is fed between the first polymerisation reactor section and the second polymerisation reactor section after at least 75% of the total residence time, preferably after at least 76%, preferably after at least 77%, preferably after at least 78%, preferably after at least 79%, preferably after at least 80%.
7. The process or reactor configuration according to any of the above statements, or in some embodiments described herein, wherein the second lactide feed is fed between the first polymerisation reactor section and the second polymerisation reactor section after at most 95% of the total residence time, preferably after at most 90%, preferably after at most 85%, for example after at most 80%.
8. The process or reactor configuration according to any of the above statements, or in some embodiments described herein, wherein the first lactide feed comprises at most 5% by weight D-lactide, compared to the total weight of the lactide feed, preferably at most 4% D-lactide, preferably at most 3% D-lactide, preferably at most 2% D-lactide, preferably at most 1% D-lactide.
9. The process or reactor configuration according to any of the above statements, or in some embodiments described herein, wherein the first lactide feed is essentially free of D-lactide.
10. The process or reactor configuration according to any of the above statements, or in some embodiments described herein, wherein the first lactide feed comprises at most 5% by weight L-lactide, compared to the total weight of the lactide feed, preferably at most 4% L-lactide, preferably at most 3% L-lactide, preferably at most 2% L-lactide, preferably at most 1% L-lactide.
11. The process or reactor configuration according to any of the above statements, or in some embodiments described herein, wherein the first lactide feed is essentially free of L-lactide.
12. The process or reactor configuration according to any of the above statements, or in some embodiments described herein, wherein the first lactide feed comprises at most 5% by weight Meso-lactide, compared to the total weight of the first lactide feed, preferably at most 4% Meso-lactide, preferably at most 3% Meso-lactide, preferably at most 2% Meso-lactide, preferably at most 1% Meso-lactide.
13. The process or reactor configuration according to any of the above statements, or in some embodiments described herein, wherein the first lactide feed is essentially free of Meso-lactide.
14. The process or reactor configuration according to any of the above statements, or in some embodiments described herein, wherein the first lactide feed comprises at most 5% by weight D/Meso-lactide, compared to the total weight of the first lactide feed, preferably at most 4% D/Meso-lactide, preferably at most 3% D/Meso-lactide, preferably at most 2% D/Meso-lactide, preferably at most 1% D/Meso-lactide.
15. The process or reactor configuration according to any of the above statements, or in some embodiments described herein, wherein the first lactide feed is essentially free of D/Meso-lactide.
16. The process or reactor configuration according to any of the above statements, or in some embodiments described herein, wherein the first lactide feed comprises at most 5% by weight L/Meso-lactide, compared to the total weight of the first lactide feed, preferably at most 4% L/Meso-lactide, preferably at most 3% L/Meso-lactide, preferably at most 2% L/Meso-lactide, preferably at most 1% L/Meso-lactide.
17. The process or reactor configuration according to any of the above statements, or in some embodiments described herein, wherein the first lactide feed is essentially free of L/Meso-lactide.
18. The process or reactor configuration according to any of the above statements, or in some embodiments described herein, wherein the second lactide feed comprises at least 90% by weight D-lactide, compared to the total weight of the second lactide feed, preferably at least 95% D-lactide, preferably at least 97% D-lactide, preferably at least 98% D-lactide, preferably at least 99% D-lactide.
19. The process or reactor configuration according to any of the above statements, or in some embodiments described herein, wherein the second lactide feed comprises at least 90% by weight L-lactide, compared to the total weight of the second lactide feed, preferably at least 95% L-lactide, preferably at least 97% L-lactide, preferably at least 98% L-lactide, preferably at least 99% L-lactide.
20. The process or reactor configuration according to any of the above statements, or in some embodiments described herein, wherein the second lactide feed comprises at least 30% by weight Meso-lactide, compared to the total weight of the second lactide feed, preferably at least 35% Meso-lactide, preferably at least 40% Meso-lactide, preferably at least 45% Meso-lactide, preferably at least 50% Meso-lactide.
21. The process or reactor configuration according to any of the above statements, or in some embodiments described herein, wherein the second lactide feed comprises at least 40% by weight D/Meso-lactide, compared to the total weight of the second lactide feed, preferably at least 50% D/Meso-lactide, preferably at least 60% D/Meso-lactide, preferably at least 70% D/Meso-lactide, preferably at least 80% D/Meso-lactide.
22. The process or reactor configuration according to any of the above statements, or in some embodiments described herein, wherein the second lactide feed comprises at least 40% by weight L/Meso-lactide, compared to the total weight of the second lactide feed, preferably at least 50% L/Meso-lactide, preferably at least 60% L/Meso-lactide, preferably at least 70% L/Meso-lactide, preferably at least 80% L/Meso-lactide.
23. The process or reactor configuration according to any of the above statements, or in some embodiments described herein, wherein the second lactide feed comprises at least 90% by weight D/Meso-lactide, compared to the total weight of the second lactide feed, preferably at least 95% D/Meso-lactide, preferably at least 97% D/Meso-lactide, preferably at least 98% D/Meso-lactide, preferably at least 99% D/Meso-lactide.
24. The process or reactor configuration according to any of the above statements, or in some embodiments described herein, wherein the second lactide feed comprises at least 90% by weight L/Meso-lactide, compared to the total weight of the second lactide feed, preferably at least 95% L/Meso-lactide, preferably at least 97% L/Meso-lactide, preferably at least 98% L/Meso-lactide, preferably at least 99% L/Meso-lactide.
25. The process or reactor configuration according to any of the above statements, or in some embodiments described herein, wherein the polylactic acid has a weight average molecular weight (M_{w}) of at least 50 kDa to at most 500 kDa, preferably at least 75 kDa to at most 400 kDa, for example at least 100 kDa to at most 300 kDa, for example about 200 kDa.
26. The process or reactor configuration according to any of the above statements, or in some embodiments described herein, wherein the polylactic acid has a ratio of the weight average molecular weight (M_{w}) to the number average molecular weight (Mₙ) from 1.0 to 4.0, preferably from 1.2 to 3.6, preferably from 3.2 to 2.8, preferably from 1.6 to 2.4, preferably from 1.8 to 2.0.
27. The process or reactor configuration according to any of the above statements, or in some embodiments described herein, wherein the polylactic acid has a density of at least 1.16 g/cm³ to at most 1.40 g/cm³, for example at least 1.18 g/cm³ to at most 1.35 g/cm³, preferably at least 1.20 g/cm³ to at most 1.30 g/cm³, preferably at least 1.22 g/cm³ to at most 1.28 g/cm³, preferably at least 1.23 g/cm³ to at most 1.26 g/cm³, for example about 1.24 g/cm³, as determined in accordance with ASTM D1505 at 23°C.
28. The process or reactor configuration according to any of the above statements, or in some embodiments described herein, wherein the first polymerisation reactor section comprises one or more CSTR type reactors.
29. The process or reactor configuration according to any of the above statements, or in some embodiments described herein, wherein the first polymerisation reactor section comprises only CSTR type reactors.
30. The process or reactor configuration according to any of the above statements, or in some embodiments described herein, wherein the second polymerisation reactor section comprises one or more PFR type reactors.
31. The process or reactor configuration according to any of the above statements, or in some embodiments described herein, wherein the second polymerisation reactor section comprises only PFR type reactors.
32. The process or reactor configuration according to any of the above statements, or in some embodiments described herein, wherein the first polymerisation reactor section comprises one or more CSTR type reactors and one or more PFR type reactors.
33. The process or reactor configuration according to any of the above statements, or in some embodiments described herein, wherein the first polymerisation reactor section comprises one or more CSTR type reactors, and wherein the second polymerisation reactor section comprises one or more PFR type reactors.
34. The process or reactor configuration according to any of the above statements, or in some embodiments described herein, wherein the first polymerisation reactor section comprises one or more CSTR type reactors and one or more PFR type reactors, and wherein the second polymerisation reactor section comprises one or more PFR type reactors.
35. The process according to any of the above statements, or in some embodiments described herein, performed in a reactor configuration according to any of the above statements, or in some embodiments described herein.
36. Use of the reactor configuration according to any of the above statements, or in some embodiments described herein, in a process according to any of the above statements, or in some embodiments described herein.
37. Polylactic acid formed by the process according to any of the above statements, or in some embodiments described herein.
38. Polylactic acid formed in a reactor configuration according to any of the above statements, or in some embodiments described herein.

In an aspect, the present invention relates to a process for polymerising lactide into polylactic acid. The process preferably comprises the steps of:
- feeding a first lactide feed into a first polymerisation reactor section; wherein the first lactide feed comprises L-lactide;
- feeding the output of the first polymerisation reactor section into a second polymerisation reactor section; and,
- feeding a second lactide feed into the second polymerisation reaction section between the first polymerisation reactor section and the second polymerisation reactor section, preferably after at most 95% of the total residence time; wherein the second lactide feed comprises D and/or meso-lactide; preferably wherein the second lactide feed comprises at least 40% by weight D/Meso-lactide, compared to the total weight of the second lactide feed.

Alternatively, the process preferably comprises the steps of:
- feeding a first lactide feed into a first polymerisation reactor section; wherein the first lactide feed comprises D-lactide;
- feeding the output of the first polymerisation reactor section into a second polymerisation reactor section; and,
- feeding a second lactide feed into the second polymerisation reaction section between the first polymerisation reactor section and the second polymerisation reactor section, preferably after at most 95% of the total residence time; wherein the second lactide feed comprises L and/or meso-lactide; preferably wherein the second lactide feed comprises at least 40% by weight L/Meso-lactide, compared to the total weight of the second lactide feed.

In an aspect, the present invention relates to a reactor configuration for polymerising lactide into polylactic acid. The reactor configuration preferably comprises:
- a first polymerisation reactor section; wherein the first lactide feed comprises L-lactide;
- a second polymerisation section;
- a feeding line for feeding the output of the first polymerisation reactor section into the second polymerisation reactor section; and,
- a second lactide feeding line for feeding a second lactide feed into the second polymerisation reaction section between the first polymerisation reactor section and the second polymerisation reactor section, the feeding lines preferably configured to feed the second lactide feed after at most 95% of the total residence time; wherein the second lactide feed comprises D and/or meso-lactide; preferably wherein the second lactide feed comprises at least 40% by weight D/Meso-lactide, compared to the total weight of the second lactide feed.

Alternatively, the reactor configuration preferably comprises:
- a first polymerisation reactor section; wherein the first lactide feed comprises D-lactide;
- a second polymerisation section;
- a feeding line for feeding the output of the first polymerisation reactor section into the second polymerisation reactor section; and,
- a second lactide feeding line for feeding a second lactide feed into the second polymerisation reaction section between the first polymerisation reactor section and the second polymerisation reactor section, the feeding lines preferably configured to feed the second lactide feed after at most 95% of the total residence time; wherein the second lactide feed comprises L and/or meso-lactide; preferably wherein the second lactide feed comprises at least 40% by weight L/Meso-lactide, compared to the total weight of the second lactide feed.

The present invention also relates to a process as described herein or embodiments thereof, performed in a reactor configuration as described herein or embodiments thereof.

The present invention also relates to the use of a reactor configuration as described herein or embodiments thereof, in a process as described herein or embodiments thereof.

The processes as described herein provide an improved lactide polymerization process by injection of D-lactide (or alternatively L-lactide) and/or purified meso-lactide in a relatively more downstream portion of the reaction section.

Lactic acid is chiral such that (R)-lactic acid (or D-lactic acid) and (S)-lactic acid (or L-lactic acid) exist. Furthermore, these enantiomers do not racemise readily. Thus, formation of lactide from two equivalents of lactic acid gives rise to three stereoisomers: (R,R)-lactide (or D-lactide), (S,S)-lactide (or L-lactide) and (R,S)-lactide (or Meso-lactide). As used herein, the terms D-lactide and Meso-lactide may be jointly referred to as "D/Meso-lactide"; and the terms L-lactide and Meso-lactide may be jointly referred to as "L/Meso-lactide";

PLA as produced in the present invention can be prepared according to any method known in the state of the art. The PLA is preferably prepared by ring-opening polymerization of lactide, which is a cyclic dimer of lactic acid, and optionally glycolide, which is a cyclic dimer of glycolic acid, or caprolactone and the like.

The lactide used in the present invention includes L-lactide, which is a cyclic dimer of L-lactic acid, D-lactide, which is a cyclic dimer of D-lactic acid, Meso-lactide, which is a cyclic dimer of D-lactic acid and L-lactic acid. According to some embodiments of the present invention, when the first lactide feed comprises L-lactide, the second lactide feed comprises at least D and/or Meso-lactide. According to some alternative embodiments of the present invention, when the first lactide feed comprises D-lactide, the second lactide feed comprises at least L and/or Meso-lactide.

Co-polymeric components other than lactic acid may be used and include dicarboxylic acid, polyhydric alcohol, hydroxycarboxylic acid, lactone, or the like, which have two or more functional groups each capable of forming an ester bonding. These are, for example, polyester, polyether, polycarbonate, or the like which have the two or more unreacted functional groups in a molecule. The hydroxycarboxylic acids may be selected from the list comprising glycolic acid, hydroxybutyric acid, hydroxyvaleric acid, hydroxypentanoic acid, hydroxycaproic acid, and hydroxyheptanoic acid.

As used herein, the term "residence time" refers to the mean residence time as calculated pro rata based on the volume. For example, the mean residence time RT₁ of the first polymer reactor section is calculated as V₁/Q₁, whereby V₁ is the volume of the first reactor section and Q₁ is the output volumetric flow rate of the first reactor zone. The mean residence time RT₂ of the second polymer reactor section is calculated as V₂/Q₂, whereby V₂ is the volume of the second reactor section and Q₂ is the output volumetric flow rate of the second reactor section. For example, in some embodiments, Q₂ may be calculated as Q₁ + Q', whereby Q' is the input volumetric flow rate of the second lactide feed. The total mean residence time RT is calculated as RT₁ + RT₂.

Typically, the productivity will reduce along the process (due to less monomer), which means that the % residence time is not equivalent to % conversion ratio. For example, an 80% residence time allows to reach a conversion higher than 80% of the targeted 95% final conversion.

The second lactide feed is preferably injected as much downstream of the reaction section as possible, which will give the highest gain on grade change transition time and fine-tuning optimization. However, preferably the first lactide feed has not been completely converted into PLA to avoid formation of a stereo-block copolymer. A stereo-block copolymer is a completely different polymer in nature and has different mechanical properties. The present invention allows to produce standard copolymer PLA, which is a copolymer of L- and D-lactide, and not stereo-block copolymer, which is a copolymer of PLLA and PDLA. Standard copolymer PLA typically has a fusion temperature (or melting point) that is lower than PLA made from 100% L or D (pure PLLA or PDLA). The irregular chains do not crystallize well and have a reduced heat resistance, while homopolymer chains crystallize fast and provide good heat stability. Stereo-block PLA typically has a fusion temperature (or melting point) that is higher than PLA made from 100% L or D (pure PLLA or PDLA), since the stereo-complex may show interlocking structures. Preferably, the PLA formed in the present invention has a fusion temperature (or melting point) that is lower than homopolymer PLA made from 100% L or D (pure PLLA or PDLA).

In some preferred embodiments, the second lactide feed is fed between the first polymerisation reactor section and the second polymerisation reactor section after at least 30% of the total residence time, preferably after at least 40%, preferably after at least 50%, preferably after at least 60%, preferably after at least 70%. In some preferred embodiments, the second lactide feed is fed between the first polymerisation reactor section and the second polymerisation reactor section after at least 75% of the total residence time, preferably after at least 76%, preferably after at least 77%, preferably after at least 78%, preferably after at least 79%, preferably after at least 80%.

Preferably, there is still a minimum residence time in the reaction section downstream of the injection point so as to properly incorporate the second lactide feed (preferably D/meso lactide) into the PLA macromolecules. Therefore, in some preferred embodiments, the second lactide feed is fed between the first polymerisation reactor section and the second polymerisation reactor section after at most 95% of the total residence time, preferably after at most 90%, preferably after at most 85%, for example after at most 80%.

In some embodiments, the first lactide feed comprises little to no D-lactide and/or little to no Meso-lactide. In such embodiments, the second lactide feed comprises mainly D-lactide and/or Meso-lactide. Therefore, in some preferred embodiments, the first lactide feed comprises at most 5% by weight D-lactide, compared to the total weight of the lactide feed, preferably at most 4% D-lactide, preferably at most 3% D-lactide, preferably at most 2% D-lactide, preferably at most 1% D-lactide. In some preferred embodiments, the first lactide feed is essentially free of D-lactide.

In some embodiments, the first lactide feed comprises little to no L-lactide and/or little to no Meso-lactide. In such embodiments, the second lactide feed comprises mainly L-lactide and/or Meso-lactide. Therefore, in some embodiments, the first lactide feed comprises at most 5% by weight L-lactide, compared to the total weight of the lactide feed, preferably at most 4% L-lactide, preferably at most 3% L-lactide, preferably at most 2% L-lactide, preferably at most 1% L-lactide. In some embodiments, the first lactide feed is essentially free of L-lactide.

In some preferred embodiments, the first lactide feed comprises at most 5% by weight Meso-lactide, compared to the total weight of the first lactide feed, preferably at most 4% Meso-lactide, preferably at most 3% Meso-lactide, preferably at most 2% Meso-lactide, preferably at most 1% Meso-lactide. In some preferred embodiments, the first lactide feed is essentially free of Meso-lactide.

In some preferred embodiments, the first lactide feed comprises at most 5% by weight D/Meso-lactide, compared to the total weight of the first lactide feed, preferably at most 4% D/Meso-lactide, preferably at most 3% D/Meso-lactide, preferably at most 2% D/Meso-lactide, preferably at most 1% D/Meso-lactide. In some preferred embodiments, the first lactide feed is essentially free of D/Meso-lactide.

In some embodiments, the first lactide feed comprises at most 5% by weight L/Meso-lactide, compared to the total weight of the first lactide feed, preferably at most 4% L/Meso-lactide, preferably at most 3% L/Meso-lactide, preferably at most 2% L/Meso-lactide, preferably at most 1% L/Meso-lactide. In some embodiments, the first lactide feed is essentially free of L/Meso-lactide.

In some embodiments, the first lactide feed comprises little to no D-lactide and/or little to no Meso-lactide. In such embodiments, the second lactide feed comprises mainly D-lactide and/or Meso-lactide. In some embodiments, the first lactide feed comprises little to no L-lactide and/or little to no Meso-lactide. In such embodiments, the second lactide feed comprises mainly L-lactide and/or Meso-lactide.

When the second lactide feed comprises mainly D-lactide, the second lactide feed preferably comprises almost exclusively of D-lactide. In some preferred embodiments, the second lactide feed comprises at least 90% by weight D-lactide, compared to the total weight of the second lactide feed, preferably at least 95% D-lactide, preferably at least 97% D-lactide, preferably at least 98% D-lactide, preferably at least 99% D-lactide.

When the second lactide feed comprises mainly L-lactide, the second lactide feed preferably comprises almost exclusively of L-lactide. In some embodiments, the second lactide feed comprises at least 90% by weight L-lactide, compared to the total weight of the second lactide feed, preferably at least 95% L-lactide, preferably at least 97% L-lactide, preferably at least 98% L-lactide, preferably at least 99% L-lactide.

When the second lactide feed comprises mainly Meso-lactide, the second lactide feed preferably comprises up to about 50% Meso-lactide In some preferred embodiments, the second lactide feed comprises at least 30% by weight Meso-lactide, compared to the total weight of the second lactide feed, preferably at least 35% Meso-lactide, preferably at least 40% Meso-lactide, preferably at least 45% Meso-lactide, preferably at least 50% Meso-lactide. The more concentrated the second lactide feed, the smaller the flow rate needs to be. This means that the pump, injection pipe, and nozzle will be smaller. In addition, the lactide injected at the second injection point still requires sufficient residence time in the second part of the reaction section to polymerise. If the flow of second lactide feed is important, the second part of the reaction section will be to be big enough to allow for sufficient residence time for polymerization. By keeping the second lactide feed flow small, this ensures that the second part of the reaction section does not need to be enlarged.

In some preferred embodiments, the second lactide feed comprises at least 40% by weight D/Meso-lactide, compared to the total weight of the second lactide feed, preferably at least 50% D/Meso-lactide, preferably at least 60% D/Meso-lactide, preferably at least 70% D/Meso-lactide, preferably at least 80% D/Meso-lactide. In some preferred embodiments, the second lactide feed comprises at least 90% by weight D/Meso-lactide, compared to the total weight of the second lactide feed, preferably at least 95% D/Meso-lactide, preferably at least 97% D/Meso-lactide, preferably at least 98% D/Meso-lactide, preferably at least 99% D/Meso-lactide.

In some embodiments, the second lactide feed comprises at least 40% by weight L/Meso-lactide, compared to the total weight of the second lactide feed, preferably at least 50% L/Meso-lactide, preferably at least 60% L/Meso-lactide, preferably at least 70% L/Meso-lactide, preferably at least 80% L/Meso-lactide. In some embodiments, the second lactide feed comprises at least 90% by weight L/Meso-lactide, compared to the total weight of the second lactide feed, preferably at least 95% L/Meso-lactide, preferably at least 97% L/Meso-lactide, preferably at least 98% L/Meso-lactide, preferably at least 99% L/Meso-lactide.

In some embodiments, the second lactide feed comprises at least 0.5% D-lactide and at most 99.5% Meso-lactide, based on the total weight of D/Meso-lactide; preferably at least 1.0% D-lactide and at most 99.0% Meso-lactide; for example at least 1.5% D-lactide and at most 98.5% Meso-lactide; for example at least 2.0% D-lactide and at most 98.0% Meso-lactide. In some embodiments, the second lactide feed comprises at most 5.0% D-lactide and at least 95.0% Meso-lactide, based on the total weight of D/Meso-lactide; preferably at most 4.0% D-lactide and at least 96.0% Meso-lactide; for example at most 3.0% D-lactide and at least 97.0% Meso-lactide; for example at most 2.0% D-lactide and at least 98.0% Meso-lactide.

In some embodiments, the second lactide feed comprises at least 0.5% L-lactide and at most 99.5% Meso-lactide, based on the total weight of L/Meso-lactide; preferably at least 1.0% L-lactide and at most 99.0% Meso-lactide; for example at least 1.5% L-lactide and at most 98.5% Meso-lactide; for example at least 2.0% L-lactide and at most 98.0% Meso-lactide. In some embodiments, the second lactide feed comprises at most 5.0% L-lactide and at least 95.0% Meso-lactide, based on the total weight of L/Meso-lactide; preferably at most 4.0% L-lactide and at least 96.0% Meso-lactide; for example at most 3.0% L-lactide and at least 97.0% Meso-lactide; for example at most 2.0% L-lactide and at least 98.0% Meso-lactide.

As used herein, the terms "polylactic acid" or "poly-lactide" or "PLA" are used interchangeably and refer to poly(lactic acid) polymers comprising repeat units derived from lactic acid.

Preferably, the polylactic acid has a number average molecular weight (Mₙ) ranging between 30 kDa and 350 kDa, more preferably between 50 kDa and 175 kDa, even more preferably between 70 kDa and 150 kDa. The number average molecular weight is measured by chromatography by gel permeation compared to a standard polystyrene in chloroform at 25°C.

In some embodiments, the polylactic acid has a weight average molecular weight (M_{w}) of at least 50 kDa to at most 500 kDa, preferably at least 75 kDa to at most 400 kDa, for example at least 100 kDa to at most 300 kDa, for example about 200 kDa. Measurement of the molecular masses may be performed at 25°C using a liquid chromatograph PolymerChar system.

In some embodiments, the ratio of the weight average molecular weight (M_{w}) to the number average molecular weight (Mₙ) is generally from 1.0 to 4.0, preferably from 1.2 to 3.6, preferably from 3.2 to 2.8, preferably from 1.6 to 2.4, preferably from 1.8 to 2.0.

In some embodiments, the polylactic acid has a density of at least 1.16 g/cm³ to at most 1.40 g/cm³, for example at least 1.18 g/cm³ to at most 1.35 g/cm³, preferably at least 1.20 g/cm³ to at most 1.30 g/cm³, preferably at least 1.22 g/cm³ to at most 1.28 g/cm³, preferably at least 1.23 g/cm³ to at most 1.26 g/cm³, for example about 1.24 g/cm³, as determined in accordance with ASTM D1505 at 23°C.

In some embodiments, the polylactic acid is not a stereo-block polymer.

The polylactic acid may optionally include additives known in the art to improve processing and application of polymer films, e.g., anti-block additives, slip additives and viscosity enhancers. When used to enhance the production of polymer films, it should be noted that these additives are not essential for blowing the PLA films per se, but may be preferentially employed to enhance the processing, performance and look of the final product. In an embodiment, the polylactic acid comprises a slip agent, preferably erucamide. In an embodiment, the polylactic acid comprises an anti-block additive, preferably talc or other silica-based products.

In some embodiments, the polylactic acid is obtained by polymerizing lactide, in the presence of a suitable catalyst and preferably in the presence of a compound of formula (VI), acting as a co-initiator and transfer agent of the polymerization,

R³-OH (VI)

wherein R³ is selected from the group consisting of C₁₋₂₀alkyl, C₆₋₃₀aryl, and C₆₋₃₀arylC₁₋₂₀alkyl, each group being optionally substituted by one or more substituents selected from the group consisting of halogen, hydroxyl, and C₁₋₆alkyl. Preferably, R³ is a group selected from C₃₋₁₂alkyl, C₆₋₁₀aryl, and C₆₋₁₀arylC₃₋₁₂alkyl, each group being optionally substituted by one or more substituents each independently selected from the group consisting of halogen, hydroxyl, and C₁₋₆alkyl; preferably, R³ is a group selected from C₃₋₁₂alkyl, C₆₋₁₀aryl, and C₆₋₁₀arylC₃₋₁₂alkyl, each group being optionally substituted by one or more substituents each independently selected from the group consisting of halogen, hydroxyl and C₁₋₄alkyl. The alcohol can be a polyol such as diol, triol or higher functionality polyhydric alcohol. The alcohol may be derived from biomass such as for instance glycerol or propanediol or any other sugar-based alcohol such as for example erythritol. The alcohol can be used alone or in combination with another alcohol.

In some embodiments, non-limiting examples of initiators include 1-octanol, isopropanol, propanediol, trimethylolpropane, 2-butanol, 3-buten-2-ol, 1,3-butanediol, 1,4-butanediol, 1,6-hexanediol, 1,7-heptanediol, benzyl alcohol, 4-bromophenol,1,4-benzenedimethanol, and (4-trifluoromethyl)benzyl alcohol; preferably, the compound of formula (VI) is selected from 1-octanol, isopropanol, and 1,4-butanediol.

The catalyst employed for this process may have general formula M(Y¹,Y², ...Y^{p})_{q}, in which M is a metal selected from the group comprising the elements of columns 3 to 12 of the periodic table of the elements, as well as the elements Al, Ga, In, TI, Ge, Sn, Pb, Sb, Ca, Mg and Bi; whereas Y¹, Y², ... Y^{p} are each substituents selected from the group comprising alkyl with 1 to 20 carbon atoms, aryl having from 6 to 30 carbon atoms, alkoxy having from 1 to 20 carbon atoms, aryloxy having from 6 to 30 carbon atoms, and other oxide, carboxylate, and halide groups as well as elements of group 15 and/or 16 of the periodic table; p and q are integers of from 1 to 6. As examples of suitable catalysts, we may notably mention the catalysts of Sn, Ti, Zr, Zn, and Bi; preferably an alkoxide or a carboxylate and more preferably Sn(Oct)₂, Ti(OiPr)₄, Ti(2-ethylhexanoate)₄, Ti(2-ethylhexyloxide)₄, Zr(OiPr)₄, Bi(neodecanoate)₃, (2,4-di-tert-butyl-6-(((2-(dimethylamino)ethyl)(methyl)amino)methyl)phenoxy)(ethoxy)zinc, or Zn(lactate)₂. Preferably, the catalyst comprises Sn(Oct)₂.

The current processes to obtain polylactic acid consist basically in preparing first a mix of different lactides, to which is incorporated an initiator and a catalyst, before being fed to a polymerization section. Reaction usually takes place with a bulk solution where polylactic acid is dissolved in liquid lactide.

The reaction (polymerization) section is typically composed of a mix of CSTRs (Continuously Stirred Tank Reactor), PFRs (Plug Flow Reactor), or loop reactors which may be considered equivalent to a CSTR (for example a loop reactor using Static Mixer Reactors).

CSTRs and PFRs are differentiated by the amount of required liquid renewal before a composition can be changed and are often expressed in number of average residence time. A reactor or reactor system is usually considered a CSTR when one needs to wait 3 residence time and it is considered to be a PFR when one has only to wait for less than 1.5 residence time (see literature). From an engineering point of view, CSTRs are the cheapest type of reactor and allow significant CAPEX reduction.

The behaviour of a CSTR is often approximated or modelled by that of a Continuous Ideally Stirred-Tank Reactor (CISTR). All calculations performed with CISTRs assume perfect mixing. In a perfectly mixed reactor, the output composition is identical to composition of the material inside the reactor, which is a function of residence time and rate of reaction. If the residence time is 5-10 times the mixing time, this approximation is valid for engineering purposes

As used herein, the term "CSTR type reactor" refers to CSTR reactors as well as to CSTR equivalents in the case of a loop reactor made of tubular reactors.

An ideal plug flow reactor has a fixed residence time which is the flowrate divided by the useful volume of the reactor. A real plug flow reactor has a narrow residence time distribution that is centred around the mean residence time also called the average residence time. Usually the behaviour is considered to be a good PFR when 2 sigma of the residence times are covered within +/-0.25 average residence time

As used herein, the term "PFR type reactor" refers to PFR reactors as well as to PFR equivalents in the case of tubular reactors.

As illustrated herein, the PFR type reactors are represented vertically. However, the present invention equally comprises the use of horizontal PFR type reactors.

CSTR type reactors are typically cheaper than other types of reactors. However, the transition time is longer. Therefore, the benefits of the present application are more outspoken when CSTR type reactors are used, particularly in the first section. This combines a reduction in cost while still keeping the transition time short.

In some preferred embodiments, the first polymerisation reactor section comprises one or more CSTR type reactors. In some preferred embodiments, the first polymerisation reactor section comprises only CSTR type reactors. In some preferred embodiments, the first polymerisation reactor section comprises one or more CSTR type reactors and one or more PFR type reactors.

PFR type reactors are typically better for PLA in terms of precision of temperature adjustment. PFR type reactors also have the advantage of being able to handle higher viscosities. In some preferred embodiments, the second polymerisation reactor section comprises one or more PFR type reactors. In some preferred embodiments, the second polymerisation reactor section comprises only PFR type reactors.

In some embodiments, the PLA reaction section is composed of two parts, a first part which handles relatively low viscosity solutions allowing to get a conversion rate of 50-70% and which is composed of one or two Continuously Stirred Tank Reactors (CSTRs) or a loop reactor which is also assimilated to CSTRs, and a second part which is able to handle higher viscosities solution (usually at least 90% conversion and preferable 95% of conversion) which is composed of one or more PFRs.

More generally, a typical PLA unit reaction section comprises a series of multiple reactors which may be different types. As there is reaction equilibrium around 95-96% conversion, the end part of the reaction section is typically always viscous. As CSTRs are usually not suitable therefor, the reaction section end part preferably comprises a PFR portion. However, since CSTRs are cheaper, an optimized configuration in terms of CAPEX could then be one or two CSTR type reactors to handle the first part (which is of relatively low viscosity) and one or two PFR type reactors to handle the relatively high viscosity of the second part.

In some preferred embodiments, the first polymerisation reactor section comprises one or more CSTR type reactors, and the second polymerisation reactor section comprises one or more PFR type reactors. In some preferred embodiments, the first polymerisation reactor section comprises one or more CSTR type reactors and one or more PFR type reactors, and the second polymerisation reactor section comprises one or more PFR type reactors.

### EXAMPLES

### Example 1: exemplary reaction sections

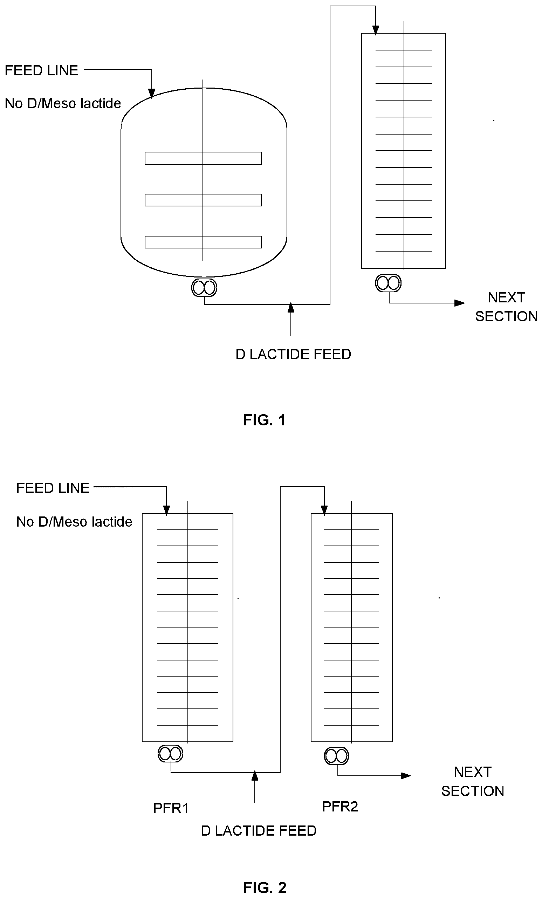

**FIG. 1** illustrates an exemplary reaction section according to an embodiment, comprising a CSTR type reactor and a PFR type reactor, whereby the D/Meso-lactide feed is between the two reactors. The first feed line comprises no D/Meso-lactide.

**FIG. 2** illustrates an exemplary reaction section according to an embodiment, comprising 2 PFR reactors, whereby the D/Meso-lactide feed is between the two reactors. The first feed line comprises no D/Meso-lactide.

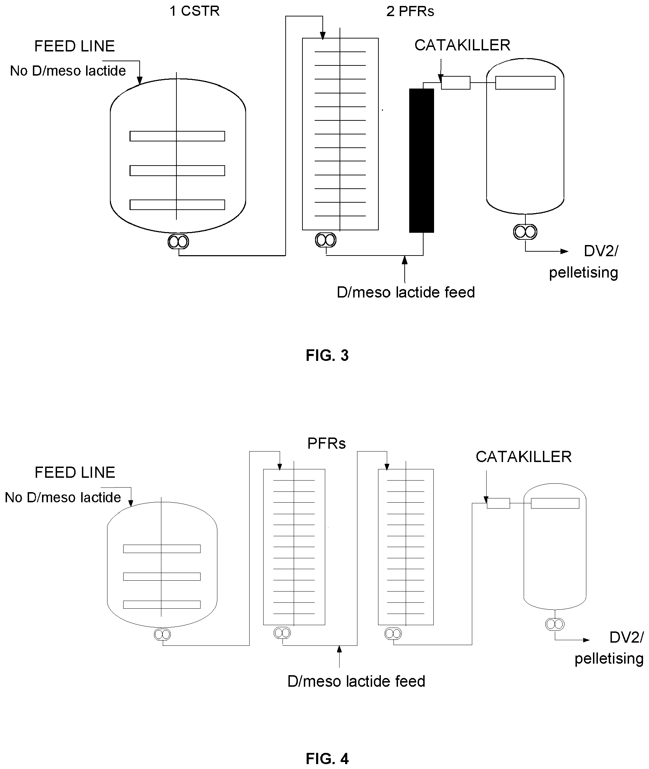

**FIG. 3** illustrates an exemplary reaction section according to an embodiment, comprising 1 CSTR type reactor, and 2 PFR type reactors (one agitated, and one static), whereby the D/Meso-lactide feed is between the two PFR type reactors. The first feed line comprises no D/Meso-lactide.

### Example 2: Reduction of transition material (losses) thanks to shorter grade change.

When there are grade changes with modification of D content in the final product, some transition products are usually generated. However, since such product is typically out of commercial specifications (off-spec), it has to be recycled or sold at a reduced price compared to prime quality material.

In this example, a 100kty plant comprises 1 CSTR and 2 PFR in series. On average, there is one grade change with D content adjustment every week. The yearly operating hours are 8400. The conversion rate is 95%, and the feed rate is 12.5 T/H. With an average specific gravity of 1.1 kg/l, the volumetric rate would be 11.2 m³/h.

The reaction section configuration is illustrated in **FIG. 4****,** comprising 1 CSTR type reactor, and 2 PFR type reactors (both agitated), whereby the D/Meso-lactide feed is between the two PFR type reactors. The first feed line comprises no D/Meso-lactide.

**Table 1** illustrates a reference case, whereby the D/Meso-lactide is fed in the first feeding line.

**Table 2** illustrates an example according to the invention, whereby the D/Meso-lactide is fed in the second feeding line, between the 2 PFR type reactors.

### D/Meso incorporation from beginning

**Table 1**

| | | | |
|---|---|---|---|
| 1 CSTR | | minutes | 30 |
| | useful volume | m³ | 5.6 |
| 2 PFRs | | minutes | 90 |
| | useful volume | m³ | 16.8 |
| | | | |
| Transition time CSTR | | | |
| | number of renewals | | 3 |
| | transition time | minutes | 90 |
| Transition time PFR | | | |
| | number of renewals | | 1.5 |
| | transition time | minutes | 135 |
| | | | |
| TOTAL transition time | | minutes | 225 |

### D/Meso incorporation between the 2 PFR type reactors

**Table 2**

| | | | |
|---|---|---|---|
| 1 CSTR | | minutes | 30 |
| | useful volume | m3 | 5.6 |
| 2 PFRs | | minutes | 90 |
| | useful volume | m3 | 16.8 |
| | | | |
| Transition time CSTR | | | |
| | number of renewals | | 0 |
| | transition time | minutes | 0 |
| Transition time PFR | | | |
| | number of renewals | | 1.5 |
| | transition time | minutes | 67.5 |
| | | | |
| TOTAL transition time | | minutes | 67.5 |
| | | | |
| GAIN PER GRADE CHANGE | | minutes | 158 |
| | | TONS | 32.89 |
| Number of grade changes/year | | | 50 |
| TOTAL LOSS REDUCTION | | TONS | 1645 |

If, for example, a 100 to 200 $/T discount is given for transition material sale, this would represent a loss reduction of about 150 to 300 k$ per year.

### Example 3: Increase in PLA production capacity

As can be seen in example 2, up to 1645 tons loss can be 'gained' if the line is saturated. This translates into an increase of capacity, which represents 1.6% of line capacity without any additional CAPEX or OPEX. If, for example, a 200 to 400 $/T margin is given for additional PLA sale, this would represent a loss reduction of about 300 to 600 k$ per year.

### Example 4: Reduction of lactide loss

Taking the same reaction configuration as in example 2, this PLA unit capacity is 100 kty, with PLLA grade (0%D) requirements of 10 kty, and PLA requirements for Max D% crystallised grades of 90 kty. The PLA unit conversion rate is 95% and the Meso-lactide generation in the lactide production unit is 7%.

**Table 3** illustrates a reference case, whereby the D/Meso-lactide is fed in the first feeding line.

**Table 4** illustrates an example according to the invention, whereby the D/Meso-lactide is fed in the second feeding line, between the 2 PFR type reactors.

### D/Meso incorporation from beginning

**Table 3**

| | | |
|---|---|---|
| 1 CSTR | minutes | 30 |
| 2 PFRs | minutes | 90 |
| Time before D adjustment is coming out from pelletizer | minutes | 120 |
| Max D content | % | 3.5 |
| Required Meso-lactide | tons | 6632 |
| Required L-lactide | tons | 98632 |
| TOTAL lactide required to meet PLA mix | tons | 105263 |
| Required Lactide production for L lactide PLA needs | tons | 106055 |
| Corresponding generation of meso lactide | tons | 7424 |
| Excess meso lactide | tons | 792 |

### D/Meso incorporation in the middle of last PFR

**Table 4**

| | | |
|---|---|---|
| 1 CSTR | Minutes | 30 |
| 2 PFRs | Minutes | 90 |
| Time before D adjustment is coming out from pelletizer | Minutes | 22.5 |
| Max D content | % | 3.75 |
| Required Meso-lactide | Tons | 7105 |
| Required L-lactide | Tons | 98158 |
| TOTAL lactide required to meet PLA mix | Tons | 105263 |
| Required Lactide production for L-lactide PLA needs | Tons | 105546 |
| Corresponding generation of meso lactide | Tons | 7388 |
| Excess meso lactide | Tons | 283 |
| Reduction | | 509 |

In this example shown in above table, one can avoid recycling about 500 tons every year. Taking a cost of recycling Lactide of 200 $/T, that represents about 100 k$ per year.

### Example 5: Lower temperature melting point PLA

As shown in Example 5, going from 3.5 % to 3.75% D content would reduce the melting point of PLA product by about 1.5°C. Although it is a small gain, it is still a significant advantage for the manufacturers of goods made of PLA, as this leads to a higher production rate and lower energy requirement for manufacturers of PLA goods. Such a change in melting point could represent an energy reduction of about 1% and a production rate increase by about the same amount.

## Claims

1. A process for polymerising lactide into polylactic acid, the process comprising the steps of:
- feeding a first lactide feed into a first polymerisation reactor section; wherein the first lactide feed comprises L-lactide;
- feeding the output of the first polymerisation reactor section into a second polymerisation reactor section; and,
- feeding a second lactide feed into the second polymerisation reaction section between the first polymerisation reactor section and the second polymerisation reactor section after at most 95% of the total residence time; wherein the second lactide feed comprises D and/or meso-lactide; and, wherein the second lactide feed comprises at least 40% by weight D/Meso-lactide, compared to the total weight of the second lactide feed.

2. A process for polymerising lactide into polylactic acid, the process comprising the steps of:
- feeding a first lactide feed into a first polymerisation reactor section; wherein the first lactide feed comprises D-lactide;
- feeding the output of the first polymerisation reactor section into a second polymerisation reactor section; and,
- feeding a second lactide feed into the second polymerisation reaction section between the first polymerisation reactor section and the second polymerisation reactor section after at most 95% of the total residence time; wherein the second lactide feed comprises L and/or meso-lactide; and, wherein the second lactide feed comprises at least 40% by weight L/Meso-lactide, compared to the total weight of the second lactide feed.

3. The process according to any one of claims 1 or 2, wherein the second lactide feed is fed between the first polymerisation reactor section and the second polymerisation reactor section after at least 30% of the total residence time, preferably after at least 40%, preferably after at least 50%, preferably after at least 60%, preferably after at least 70%, preferably after at least 75% of the total residence time, preferably after at least 76%, preferably after at least 77%, preferably after at least 78%, preferably after at least 79%, preferably after at least 80%.

4. The process according to any one of the preceding claims, wherein the second lactide feed is fed between the first polymerisation reactor section and the second polymerisation reactor section after at most 90%, preferably after at most 85%, for example after at most 80% of the total residence time.

5. The process according to any one of the preceding claims, wherein the first lactide feed is essentially free of D-lactide or essentially free of L-lactide.

6. The process according to any one of the preceding claims, wherein the first lactide feed is essentially free of Meso-lactide.

7. The process according to any one of the preceding claims, wherein the polylactic acid is not a stereo-block copolymer.

8. The process according to any one of the preceding claims, wherein the second lactide feed comprises at least 90% by weight D-lactide, compared to the total weight of the second lactide feed, preferably at least 95% D-lactide, preferably at least 97% D-lactide, preferably at least 98% D-lactide, preferably at least 99% D-lactide.

9. The process according to any one of the preceding claims, wherein the second lactide feed comprises at least 30% by weight Meso-lactide, compared to the total weight of the second lactide feed, preferably at least 35% Meso-lactide, preferably at least 40% Meso-lactide, preferably at least 45% Meso-lactide, preferably at least 50% Meso-lactide, compared to the total weight of the second lactide feed.

10. A reactor configuration for polymerising lactide into polylactic acid, the reactor configuration comprising:
- a first polymerisation reactor section;
- a first lactide feeding line for feeding a first lactide feed into the first polymerisation reactor section; wherein the first lactide feed comprises L-lactide;
- a second polymerisation section;
- a feeding line for feeding the output of the first polymerisation reactor section into the second polymerisation reactor section; and,
- a second lactide feeding line for feeding a second lactide feed into the second polymerisation reaction section between the first polymerisation reactor section and the second polymerisation reactor section, the feeding lines configured to feed the second lactide feed after at most 95% of the total residence time; wherein the second lactide feed comprises D and/or Meso-lactide; and, wherein the second lactide feed comprises at least 40% by weight D/Meso-lactide, compared to the total weight of the second lactide feed.

11. A reactor configuration for polymerising lactide into polylactic acid, the reactor configuration comprising:
- a first polymerisation reactor section;
- a first lactide feeding line for feeding a first lactide feed into the first polymerisation reactor section; wherein the first lactide feed comprises D-lactide;
- a second polymerisation section;
- a feeding line for feeding the output of the first polymerisation reactor section into the second polymerisation reactor section; and,
- a second lactide feeding line for feeding a second lactide feed into the second polymerisation reaction section between the first polymerisation reactor section and the second polymerisation reactor section, the feeding lines configured to feed the second lactide feed after at most 95% of the total residence time; wherein the second lactide feed comprises L and/or Meso-lactide; and, wherein the second lactide feed comprises at least 40% by weight L/Meso-lactide, compared to the total weight of the second lactide feed.

12. The reactor configuration according to any one of claims 10 or 11, wherein the first polymerisation reactor section comprises one or more CSTR type reactors.

13. The reactor configuration according to any one of claims 10 to 12, wherein the first polymerisation reactor section comprises one or more CSTR type reactors and one or more PFR type reactors.

14. The reactor configuration according to any one of claims 10 to 13, wherein the second polymerisation reactor section comprises one or more PFR type reactors.

15. The process according to any of claims 1 to 9 performed in a reactor configuration according to any one of claims 10 to 14.

## Patentansprüche

1. Verfahren zum Polymerisieren von Lactid zu Polymilchsäure, wobei das Verfahren die folgenden Schritte umfasst:
- Einführen einer ersten Lactidbeschickung in einen ersten Polymerisationsreaktorabschnitt; wobei die erste Lactidbeschickung L-Lactid umfasst;
- Einführen der Ausgabe aus dem ersten Polymerisationsreaktorabschnitt in einen zweiten Polymerisationsreaktorabschnitt; und,
- Einführen einer zweiten Lactidbeschickung in den zweiten Polymerisationsreaktorabschnitt zwischen dem ersten Polymerisationsreaktorabschnitt und dem zweiten Polymerisationsreaktorabschnitt nach höchstens 95 % der gesamten Verweilzeit; wobei die zweite Lactidbeschickung D- und/oder Meso-Lactid umfasst; und wobei die zweite Lactidbeschickung mindestens 40 Gew.-% D-/Meso-Lactid umfasst, verglichen mit dem Gesamtgewicht der zweiten Lactidbeschickung.

2. Verfahren zum Polymerisieren von Lactid zu Polymilchsäure, wobei das Verfahren die folgenden Schritte umfasst:
- Einführen einer ersten Lactidbeschickung in einen ersten Polymerisationsreaktorabschnitt; wobei die erste Lactidbeschickung D-Lactid umfasst;
- Einführen der Ausgabe aus dem ersten Polymerisationsreaktorabschnitt in einen zweiten Polymerisationsreaktorabschnitt; und,
- Einführen einer zweiten Lactidbeschickung in den zweiten Polymerisationsreaktorabschnitt zwischen dem ersten Polymerisationsreaktorabschnitt und dem zweiten Polymerisationsreaktorabschnitt nach höchstens 95 % der gesamten Verweilzeit; wobei die zweite Lactidbeschickung L- und/oder Meso-Lactid umfasst; und wobei die zweite Lactidbeschickung mindestens 40 Gew.-% L-/Meso-Lactid umfasst, verglichen mit dem Gesamtgewicht der zweiten Lactidbeschickung.

3. Verfahren nach einem der Ansprüche 1 oder 2, wobei die zweite Lactidbeschickung zwischen dem ersten Polymerisationsreaktorabschnitt und dem zweiten Polymerisationsreaktorabschnitt nach mindestens 30 % der gesamten Verweilzeit, vorzugsweise nach mindestens 40 %, vorzugsweise nach mindestens 50 %, vorzugsweise nach mindestens 60 %, vorzugsweise nach mindestens 70 %, vorzugsweise nach mindestens 75 % der gesamten Verweilzeit, vorzugsweise nach mindestens 76 %, vorzugsweise nach mindestens 77 %, vorzugsweise nach mindestens 78 %, vorzugsweise nach mindestens 79 %, vorzugsweise nach mindestens 80 %, zugeführt wird.

4. Verfahren nach einem der vorhergehenden Ansprüche, wobei die zweite Lactidbeschickung zwischen dem ersten Polymerisationsreaktorabschnitt und dem zweiten Polymerisationsreaktorabschnitt nach höchstens 90 %, vorzugsweise nach höchstens 85 %, beispielsweise nach höchstens 80 % der gesamten Verweilzeit zugeführt wird.

5. Verfahren nach einem der vorhergehenden Ansprüche, wobei die erste Lactidbeschickung im Wesentlichen frei von D-Lactid oder im Wesentlichen frei von L-Lactid ist.

6. Verfahren nach einem der vorhergehenden Ansprüche, wobei die erste Lactidbeschickung im Wesentlichen frei von Meso-Lactid ist.

7. Verfahren nach einem der vorhergehenden Ansprüche, wobei die Polymilchsäure kein Stereoblockcopolymer ist.

8. Verfahren nach einem der vorhergehenden Ansprüche, wobei die zweite Lactidbeschickung, verglichen mit dem Gesamtgewicht der zweiten Lactidbeschickung, mindestens 90 Gew.-% D-Lactid, vorzugsweise mindestens 95 % D-Lactid, vorzugsweise mindestens 97 % D-Lactid, vorzugsweise mindestens 98 % D-Lactid, vorzugsweise mindestens 99 % D-Lactid umfasst.

9. Verfahren nach einem der vorhergehenden Ansprüche, wobei die zweite Lactidbeschickung, verglichen mit dem Gesamtgewicht der zweiten Lactidbeschickung, mindestens 30 Gew.-% Meso-Lactid, vorzugsweise mindestens 35% Meso-Lactid, vorzugsweise mindestens 40% Meso-Lactid, vorzugsweise mindestens 45% Meso-Lactid, vorzugsweise mindestens 50% Meso-Lactid, verglichen mit dem Gesamtgewicht der zweiten Lactidbeschickung, umfasst.

10. Reaktorkonfiguration zum Polymerisieren von Lactid zu Polymilchsäure, wobei die Reaktorkonfiguration umfasst:
- einen ersten Polymerisationsreaktorabschnitt;
- eine erste Lactidbeschickungsleitung zum Einführen einer ersten Lactidbeschickung zum ersten Polymerisationsreaktorabschnitt; wobei die erste Lactidbeschickung L-Lactid umfasst;
- einen zweiten Polymerisationsabschnitt;
- eine Beschickungsleitung zum Einführen der Ausgabe des ersten Polymerisationsreaktorabschnitts zum zweiten Polymerisationsreaktorabschnitt; und,
- eine zweite Lactidbeschickungsleitung zum Einführen einer zweiten Lactidbeschickung zum zweiten Polymerisationsreaktorabschnitt zwischen dem ersten Polymerisationsreaktorabschnitt und dem zweiten Polymerisationsreaktorabschnitt, wobei die Beschickungsleitungen so konfiguriert sind, dass sie die zweite Lactidbeschickung nach höchstens 95 % der gesamten Verweilzeit einführen; wobei die zweite Lactidbeschickung D- und/oder Meso-Lactid umfasst; und wobei die zweite Lactidbeschickung mindestens 40 Gew.-% D-/Meso-Lactid, verglichen mit dem Gesamtgewicht der zweiten Lactidbeschickung, umfasst.

11. Reaktorkonfiguration zum Polymerisieren von Lactid zu Polymilchsäure, wobei die Reaktorkonfiguration umfasst:
- einen ersten Polymerisationsreaktorabschnitt;
- eine erste Lactidbeschickungsleitung zum Einführen einer ersten Lactidbeschickung zum ersten Polymerisationsreaktorabschnitt; wobei die erste Lactidbeschickung D-Lactid umfasst;
- einen zweiten Polymerisationsabschnitt;
- eine Beschickungsleitung zum Einführen der Ausgabe des ersten Polymerisationsreaktorabschnitts zum zweiten Polymerisationsreaktorabschnitt; und,
- eine zweite Lactidbeschickungsleitung zum Einführen einer zweiten Lactidbeschickung zum zweiten Polymerisationsreaktorabschnitt zwischen dem ersten Polymerisationsreaktorabschnitt und dem zweiten Polymerisationsreaktorabschnitt, wobei die Beschickungsleitungen so konfiguriert sind, dass sie die zweite Lactidbeschickung nach höchstens 95 % der gesamten Verweilzeit einführen; wobei die zweite Lactidbeschickung L- und/oder Meso-Lactid umfasst; und wobei die zweite Lactidbeschickung mindestens 40 Gew.-% L-/Meso-Lactid, verglichen mit dem Gesamtgewicht der zweiten Lactidbeschickung, umfasst.

12. Reaktorkonfiguration nach einem der Ansprüche 10 oder 11, wobei der erste Polymerisationsreaktorabschnitt einen oder mehrere Reaktoren vom Typ Rührkesselreaktor umfasst.

13. Reaktorkonfiguration nach einem der Ansprüche 10 bis 12, wobei der erste Polymerisationsreaktorabschnitt einen oder mehrere Reaktoren vom Typ Rührkesselreaktor und einen oder mehrere Reaktoren vom Typ Kolbenstromreaktor umfasst.

14. Reaktorkonfiguration nach einem der Ansprüche 10 bis 13, wobei der zweite Polymerisationsreaktorabschnitt einen oder mehrere Reaktoren vom Typ Kolbenstromreaktor umfasst.

15. Verfahren nach einem der Ansprüche 1 bis 9, durchgeführt in einer Reaktorkonfiguration nach einem der Ansprüche 10 bis 14.

## Revendications

1. Procédé pour polymériser du lactide en acide polylactique, le procédé comprenant les étapes suivantes :
- alimentation d'une première alimentation en lactide dans une première section de réacteur de polymérisation ; dans lequel la première alimentation en lactide comprend du L-lactide ;
- alimentation de la sortie de la première section de réacteur de polymérisation dans une deuxième section de réacteur de polymérisation ; et
- alimentation d'une deuxième alimentation en lactide dans la deuxième section de réaction de polymérisation entre la première section de réacteur de polymérisation et la deuxième section de réacteur de polymérisation après au plus 95 % du temps de séjour total ; dans lequel la deuxième alimentation en lactide comprend du D-lactide et/ou du méso-lactide ; et dans lequel la deuxième alimentation en lactide comprend au moins 40 % en masse de D/méso-lactide, par rapport à la masse totale de la deuxième alimentation en lactide.

2. Procédé pour polymériser du lactide en acide polylactique, le procédé comprenant les étapes suivantes :
- alimentation d'une première alimentation en lactide dans une première section de réacteur de polymérisation ; dans lequel la première alimentation en lactide comprend du D-lactide ;
- alimentation de la sortie de la première section de réacteur de polymérisation dans une deuxième section de réacteur de polymérisation ; et
- alimentation d'une deuxième alimentation en lactide dans la deuxième section de réaction de polymérisation entre la première section de réacteur de polymérisation et la deuxième section de réacteur de polymérisation après au plus 95 % du temps de séjour total ; dans lequel la deuxième alimentation en lactide comprend du L-lactide et/ou du méso-lactide ; et dans lequel la deuxième alimentation en lactide comprend au moins 40 % en masse de L/méso-lactide, par rapport à la masse totale de la deuxième alimentation en lactide.

3. Procédé selon l'une quelconque des revendications 1 et 2, dans lequel la deuxième alimentation en lactide est alimentée entre la première section de réacteur de polymérisation et la deuxième section de réacteur de polymérisation après au moins 30 % du temps de séjour total, de préférence après au moins 40 %, de préférence après au moins 50 %, de préférence après au moins 60 %, de préférence après au moins 70 %, de préférence après au moins 75 % du temps de séjour total, de préférence après au moins 76 %, de préférence après au moins 77 %, de préférence après au moins 78 %, de préférence après au moins 79 %, de préférence après au moins 80 %.

4. Procédé selon l'une quelconque des revendications précédentes, dans lequel la deuxième alimentation en lactide est alimentée entre la première section de réacteur de polymérisation et la deuxième section de réacteur de polymérisation après au plus 90 %, de préférence après au plus 85 %, par exemple après au plus 80 % du temps de séjour total.

5. Procédé selon l'une quelconque des revendications précédentes, dans lequel la première alimentation en lactide est essentiellement exempte de D-lactide ou essentiellement exempte de L-lactide.

6. Procédé selon l'une quelconque des revendications précédentes, dans lequel la première alimentation en lactide est essentiellement exempte de méso-lactide.

7. Procédé selon l'une quelconque des revendications précédentes, dans lequel l'acide polylactique n'est pas un copolymère à stéréoblocs.

8. Procédé selon l'une quelconque des revendications précédentes, dans lequel la deuxième alimentation en lactide comprend au moins 90 % en masse de D-lactide, par rapport à la masse totale de la deuxième alimentation en lactide, de préférence au moins 95 % de D-lactide, de préférence au moins 97 % de D-lactide, de préférence au moins 98 % de D-lactide, de préférence au moins 99 % de D-lactide.

9. Procédé selon l'une quelconque des revendications précédentes, dans lequel la deuxième alimentation en lactide comprend au moins 30 % en masse de méso-lactide, par rapport à la masse totale de la deuxième alimentation en lactide, de préférence au moins 35 % de méso-lactide, de préférence au moins 40 % de méso-lactide, de préférence au moins 45 % de méso-lactide, de préférence au moins 50 % de méso-lactide, par rapport à la masse totale de la deuxième alimentation en lactide.

10. Configuration de réacteur pour polymériser du lactide en acide polylactique, la configuration de réacteur comprenant :
- une première section de réacteur de polymérisation ;
- une première ligne d'alimentation en lactide pour alimenter une première alimentation en lactide dans la première section de réacteur de polymérisation ; dans laquelle la première alimentation en lactide comprend du L-lactide ;
- une deuxième section de polymérisation ;
- une ligne d'alimentation pour alimenter la sortie de la première section de réacteur de polymérisation dans la deuxième section de réacteur de polymérisation ; et
- une deuxième ligne d'alimentation en lactide pour alimenter une deuxième alimentation en lactide dans la deuxième section de réaction de polymérisation entre la première section de réacteur de polymérisation et la deuxième section de réacteur de polymérisation, les lignes d'alimentation étant configurées pour alimenter la deuxième alimentation en lactide après au plus 95 % du temps de séjour total ; dans laquelle la deuxième alimentation en lactide comprend du D-lactide et/ou du méso-lactide ; et dans laquelle la deuxième alimentation en lactide comprend au moins 40 % en masse de D/méso-lactide, par rapport à la masse totale de la deuxième alimentation en lactide.

11. Configuration de réacteur pour polymériser du lactide en acide polylactique, la configuration de réacteur comprenant :
- une première section de réacteur de polymérisation ;
- une première ligne d'alimentation en lactide pour alimenter une première alimentation en lactide dans la première section de réacteur de polymérisation ; dans laquelle la première alimentation en lactide comprend du D-lactide ;
- une deuxième section de polymérisation ;
- une ligne d'alimentation pour alimenter la sortie de la première section de réacteur de polymérisation dans la deuxième section de réacteur de polymérisation ; et
- une deuxième ligne d'alimentation en lactide pour alimenter une deuxième alimentation en lactide dans la deuxième section de réaction de polymérisation entre la première section de réacteur de polymérisation et la deuxième section de réacteur de polymérisation, les lignes d'alimentation étant configurées pour alimenter la deuxième alimentation en lactide après au plus 95 % du temps de séjour total ; dans laquelle la deuxième alimentation en lactide comprend du L-lactide et/ou du méso-lactide ; et dans laquelle la deuxième alimentation en lactide comprend au moins 40 % en masse de L/méso-lactide, par rapport à la masse totale de la deuxième alimentation en lactide.

12. Configuration de réacteur selon l'une quelconque des revendications 10 et 11, dans laquelle la première section de réacteur de polymérisation comprend un ou plusieurs réacteurs de type CSTR.

13. Configuration de réacteur selon l'une quelconque des revendications 10 à 12, dans laquelle la première section de réacteur de polymérisation comprend un ou plusieurs réacteurs de type CSTR et un ou plusieurs réacteurs de type PFR.

14. Configuration de réacteur selon l'une quelconque des revendications 10 à 13, dans laquelle la deuxième section de réacteur de polymérisation comprend un ou plusieurs réacteurs de type PFR.

15. Procédé selon l'une quelconque des revendications 1 à 9, mis en oeuvre dans une configuration de réacteur selon l'une quelconque des revendications 10 à 14.
